# EUROPEAN PATENT SPECIFICATION

(11) **EP 2 591 241 B1**
(45) Date of publication and mention of the grant of the patent: **23.09.2015**
(21) Application number: 10727672.7
(22) Date of filing: 03.06.2010
(51) Int. Cl.: F16C 19/54, F16C 25/08

(54) **AXIALLY PRELOADED BEARING ARRANGEMENT**
AXIAL VORGESPANNTE LAGERANORDNUNG
AGENCEMENT DE PALIER AXIALEMENT PRÉCHARGÉ

(43) Date of publication of application: 15.05.2013
(73) Proprietor: AB SKF, 415 50 Göteborg (SE)
(72) Inventor: HAANS, Victor, NL-3059 VB rotterdam (NL); VISSERS, Carl, NL-5275 BT Den Dungen (NL); ROMIJN, Thomas Constantijn Jonathan, NL-3481 KD Harmelen (NL); DORRESTEIN, Igor, NL-3446 DM Woerden (NL); OLSCHEWSKI, Armin, Herbert, Emil, August, 97422 Schweinfurt (DE)
(74) Representative: Burö, Sven Peter
(86) International application number: PCT/EP2010/003370
(87) International publication number: WO 2011/150948

(56) References cited:
- DE-A1- 10 026 178
- FR-A2- 2 404 770
- US-A1- 2003 026 510
- US-A1- 2004 228 559

## Description

### Technical Field

The invention relates to a bearing arrangement, comprising a driven shaft element which is supported by at least two roller bearings, wherein the roller bearings are arranged at an axial distance along an axis and wherein an actuator element is arranged by which the axial pre-load between the two roller bearings can be influenced.

### Background

A bearing arrangement of this kind is shown for example in US 3,762,783. Here a shaft is supported by two roller bearings relatively to a housing. An expansion or actuator element being a coiled spring is engaged to preload the roller bearings. The pre-load effect can be influenced by a respective dimensioning of the coiled spring.

In some applications it is desired that the axial pre-load of a bearing arrangement, i. e. the axial load between two cooperating roller bearings, is adjusted in dependence on a torque which is transferred through the shaft element. Specifically, it is desired that the preload is interactively and automatically adapted depending on the transferred torque.

The pre-known solution does not allow an interactive adaption of the torque. To the contrary, after the selection of the coiled spring which is employed the pre-loading effect cannot be modified.

Document US 2004/0228559 A1 discloses a bearing arrangement comprising the features of the preamble of claim 1.

### Summary of the invention

According to the invention, a design is proposed for a bearing arrangement which comprises a driven shaft element. The shaft element is supported by at least two roller bearings which are arranged at an axial distance. Furthermore, an actuator element is employed by which the axial pre-load between the two roller bearings can be influenced.

It is an **objec**t of the invention to propose a design for such a bearing arrangement which allows an automatic adjustment of the axial pre-load between the two bearings in dependence on the torque which is transferred through the shaft element. This should be done in an easy way which allows a cost-effective realization.

A **solution** according to the invention is characterized in that the actuator element comprises a first axial end section and a second axial end section, wherein a plurality of beam elements extend between the first and second axial end sections, wherein the beam elements are arranged along an outer circumferential surface of the actuator element and wherein the beam elements are running along a helical curve or straight line between the first and second axial end sections.

The first axial end section of the actuator element is rotationally connected to the shaft element, wherein the second axial end section of the actuator element is rotationally connected to an input shaft.

The actuator element has preferably a generally hollow-cylindrical or conical base geometry. The first and/or second axial end sections are preferably designed as ring-shaped sections.

The beam elements can be designed and arranged so that hollow sections exist between two adjacent beam elements - seen in circumferential direction.

An alternative suggests that a filler material is arranged between the beam elements. The filler material can be for example rubber material.

At least one of the beam elements can be equipped with a sensor element for measurement of the stain in the beam element. Here, preferably a strain gauge is employed.

At least one damping element can be arranged between two adjacent beam elements to prevent oscillations or vibrations.

The actuator element is preferably arranged coaxially to the shaft element. Furthermore, the actuator element and the shaft element can be arranged in series.

An end stop can be arranged at one axial end section of the actuator element forming a support for axial forces from the actuator element. The axial end section can comprise a sliding surface. It is also possible that a thrust bearing is arranged between the axial end section of the actuator element and the end stop. The thrust bearing element can be an axial sliding bearing or an axial roller bearing.

The actuator element can be arranged between the two roller bearings. In this case the shaft element can be split at a location between the two roller bearings. Alternatively, the actuator element can be arranged adjacent to one of the roller bearing and extending in a direction remote from the other roller bearing.

The roller bearings are preferably taper roller bearings or angular contact ball bearings.

The beam elements consist preferably of metal, especially of steel. An alternative proposes that the beam elements consist of a fiber material, especially of a carbon composite material. Generally, the actuator element can consist of a variety of materials including plastic.

The bearing arrangement can be for example a part of a pinion gear unit, especially of a pinion gear unit being part of a power train of an automotive. Of course, also other applications can be equipped according to the invention, e. g. windmills.

### Brief description of the drawings

The drawings show embodiments of the bearing arrangement according to the invention.
- Fig. 1: shows a perspective view, partially broken, of a bearing arrangement with a driven shaft and an actuator element for adjusting the pre-load of the bearing arrangement,
- Fig. 2: shows a cross section through a bearing arrangement according to Fig. 1,
- Fig. 3: shows a perspective view of an actuator element according to the embodiment according to Fig. 1,
- Fig. 4: shows a perspective view of an actuator element, equipped with a strain gauge to detect the strain in the actuator element,
- Fig. 5: shows a perspective view of an actuator element, equipped with a damping element which is shown only schematically,
- Fig. 6: shows a perspective view of an actuator element according to another embodiment,
- Fig. 7a: till
- Fig. 7d: show schematically different bearing arrangements with an actuator element, wherein the rolling bearings of the embodiment are arrangement in X-configuration and
- Fig. 8a: till
- Fig. 8d: show schematically different bearing arrangements with an actuator element, wherein the rolling bearings of the embodiment are arrangement in O-configuration.

### Detailed description of the invention

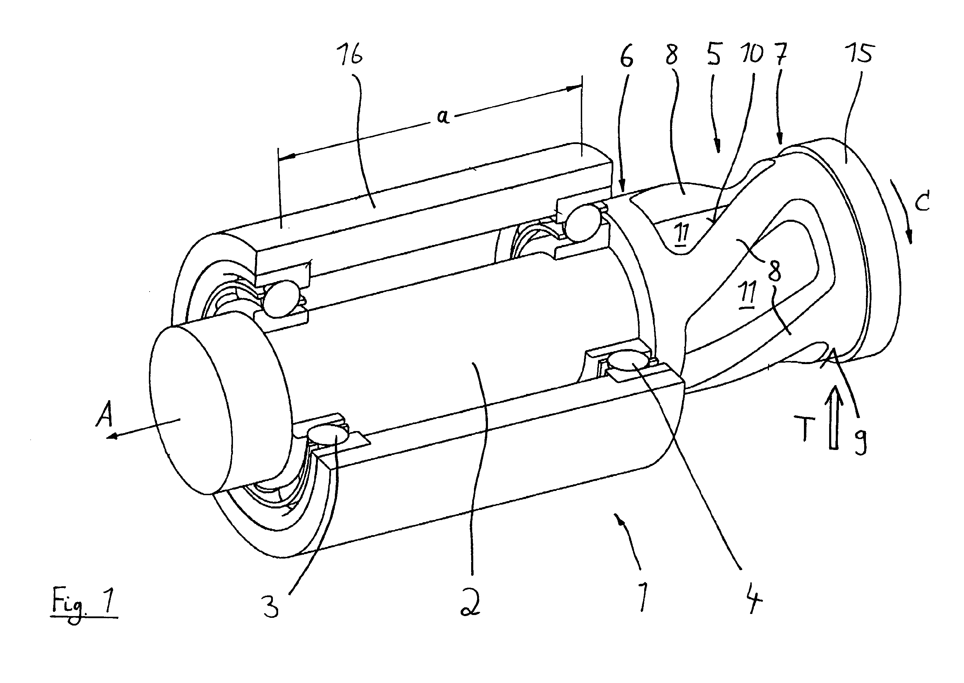

In Fig. 1 a bearing arrangement 1 is shown by which a driven shaft element 2 (which is an output shaft) is supported. For this support function two roller bearings 3 and 4 are arranged which are positioned in an axial distance a along an axis A (axial direction). The two roller bearings 3, 4 are designed as angular contact ball bearings in an O-configuration in the present case. The two outer rings of the two bearings 3, 4 are supported by a bush 16. The outer rings of the roller bearings 3, 4 can be arranged with press fit in the bush 16.

The shaft element 2 is connected with its right end region 26 with an actuator element 5 which is adapted to change its length in response to an applied torque; insofar the actuator element 5 could also be called an expansion (or contraction) element. From the right end side of the actuator element 6 a torque T is applied via a flange 25 which is connected with an input shaft 24 onto the actuator element 5 which torque is transferred through the whole axial extension of the shaft element 2 from its end region 26 to its left end side. There, a (not depicted) pinion can be arranged by which the torque is transferred into a bevel gear or the like.

The actuator element 5 comprises two ring-shaped end sections 6 and 7, namely a first axial end section 6 and a second axial end section 7. The two end sections 6, 7 are connected to each other by a plurality of beam elements 8, i. e. the beam elements 8 extend between the first and second axial end sections 6, 7. The beam elements 8 are arranged along an outer circumferential surface 9; in the present case the outer circumferential surface has a cylindrical shape. The beam elements 8 are running along a helical curve 10 between the two axial end sections 6, 7. The beam elements 8 are arranged with a spacing in circumferential direction C, i. e. hollow sections 11 exist between two adjacent beam elements 8.

That means that the torque T is transferred from the input shaft 24 into the second axial end section 7 of the actuator element 5, through the actuator element 5 to the first axial end section 6 of it and from there into the shaft element 2 which acts as an output shaft. For transferring the torque from the input shaft 24 into the actuator element 5 a respective flange 25 can be employed. In other words: The whole shaft of the depicted arrangement is split into an input shaft 24 and an output shaft 2, wherein the input shaft 24 and the output shaft 2 are connected via the actuator 5.

In the embodiment shown in Fig. 1 the actuator element 5 has three beam elements 8. Due to the fact that the beam elements 8 run along a helical curve 10 it is observed that a torsional deformation between the two end sections 6, 7 leads to a change in the axial distance between the two end sections 6, 7. The right end section, i. e. the second axial end section 7 is axially supported by an end stop 15, i. e. the second axial end section 7 cannot be displaced to the right. Thus, a torsional deformation due to the torque T presses the first axial end section 6 to the left side, so that it presses axially onto the inner ring of the roller bearing 4. By doing so, the pre-load in the bearing arrangement 1 is increased.

Thus, the actuator element 5 acts as an actuator so that the input torque T on the actuator 5 is converted to a bearing pre-load.

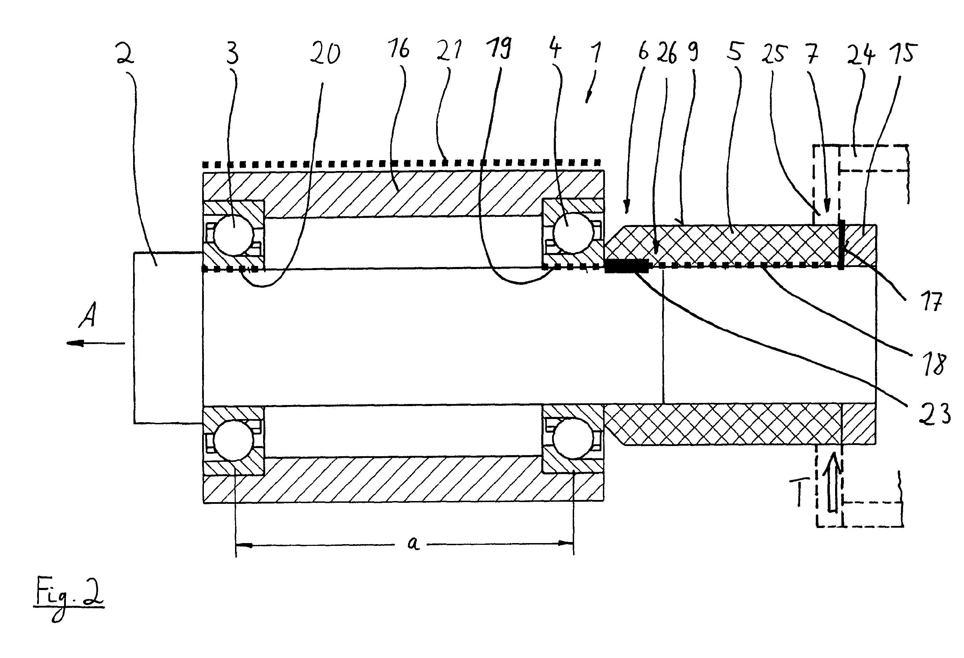

Fig. 2 shows this situation again. The torque application T is done in the second axial end section 7 of the actuator element 5. A sliding surface 17 of the end stop 15 supports the second axial end section 7 of the actuator element 5. The shaft element 2 has in its axial extension along the actuator element 5 a sliding contact denoted with 18. A sliding contact is also provided at 19 between the shaft element 2 and the inner ring of the roller bearing 4. At 20 a sliding contact or a fixed contact can be provided between the shaft element 2 and the inner ring of the roller bearing 3. The bush 16 is arranged with a fixed contact 21 in a housing (not depicted). The contact area located on the inside of the first axial end section 6 is equipped with torque transfer means 23 which allows an axial sliding between the actuator element 5 and the shaft element 2 which is established for example by splines. Thus, the contact point or contact area at the reference numeral 23 is an axially sliding contact which allows torque transfer from the actuator element 5 to the output shaft 2.

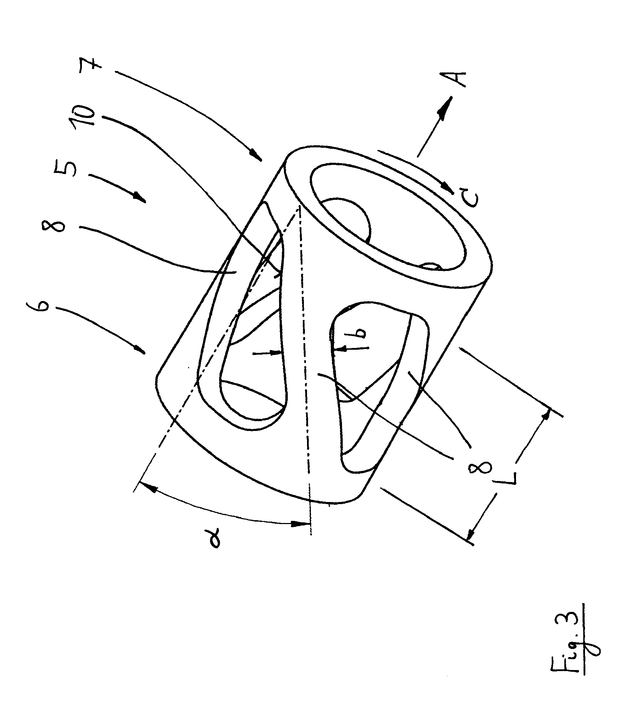

In Fig. 3 some relevant geometrical data are denoted. The actuator element 5 has four beam elements 8 in the present case which run along a helical curve 10. The angle α of the orientation of the length axis of the beam element 8 and the axial direction A defines the actuation effect of the actuator element 5. The torsional deformation of the shaft will result in an axial deformation determined by the angle α. If the angle α is small, large axial forces can be obtained given a certain input torque. In the depicted embodiment the angle α is about 30°.

A change in the direction of rotation between the two end sections 6, 7 changes the movement of the actuator element 5 from expansion to contraction and vice versa.

It should be noted that the beam element 8 can be designed straight (as depicted) or can have any kind of a curve (e. g. S-shaped). Also the number of beam elements 8 can vary due to the specific demands of an application.

Further relevant parameters of the actuator element 5 are the width b of the beam elements 8 and their length L in axial direction.

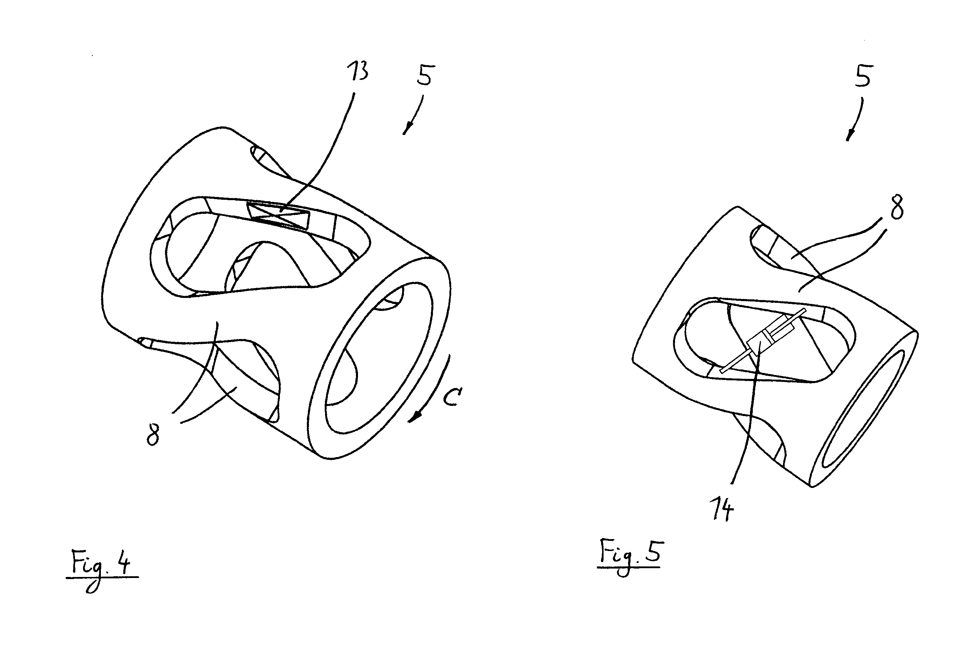

In Fig. 4 it is shown that the beam elements 8 or at least one of them can be equipped with a sensor element 13, which is a strain gauge in the embodiment. By a sensor element 13 the actual strain in the beam element 8 can be detected, which is a direct indicator for the pre-load force which is applied onto the bearing arrangement. The application of strain gauges 13 on the beam elements 8 of the actuator allows thus to measure the amount of torque that is transferred.

To prevent oscillations or vibrations a damping element 14 can be arranged between two or more beam elements 8 as shown in Fig. 5. This depiction is a schematic representation only. The damping element 14 can be a damping device but also a damping material which is brought between two beam elements 8, e. g. a damping material like rubber.

The actuator element 5 is a very stiff torsion spring. The open areas (hollow sections 11) between the beam elements 8 can thus be used for adding damping using a damper or damping materials like rubber. Hence, a very compact spring-damper system is feasible.

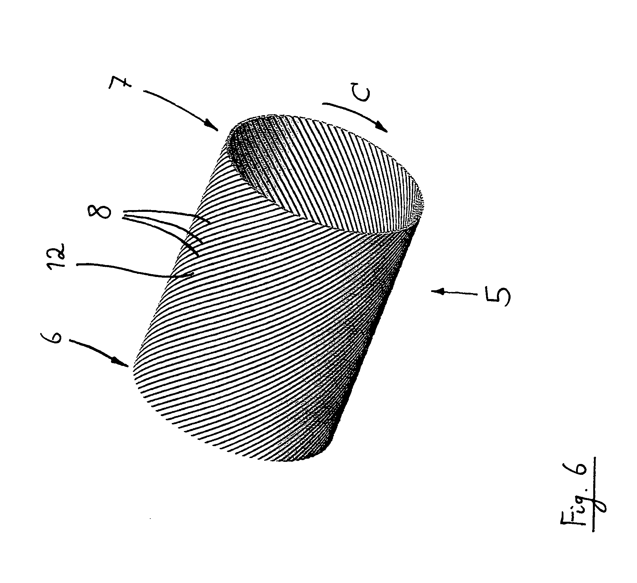

In Fig. 6 another embodiment of an actuator element 5 is shown. Here, the beam elements 8 are again arranged under the mentioned angle, but here the beam elements 8 are formed by fiber material, e. g. carbon composite material. Between the single fibers a filler material 12 is placed which hold the plurality of beam elements 8 in position. The filler material 12 can be a soft material.

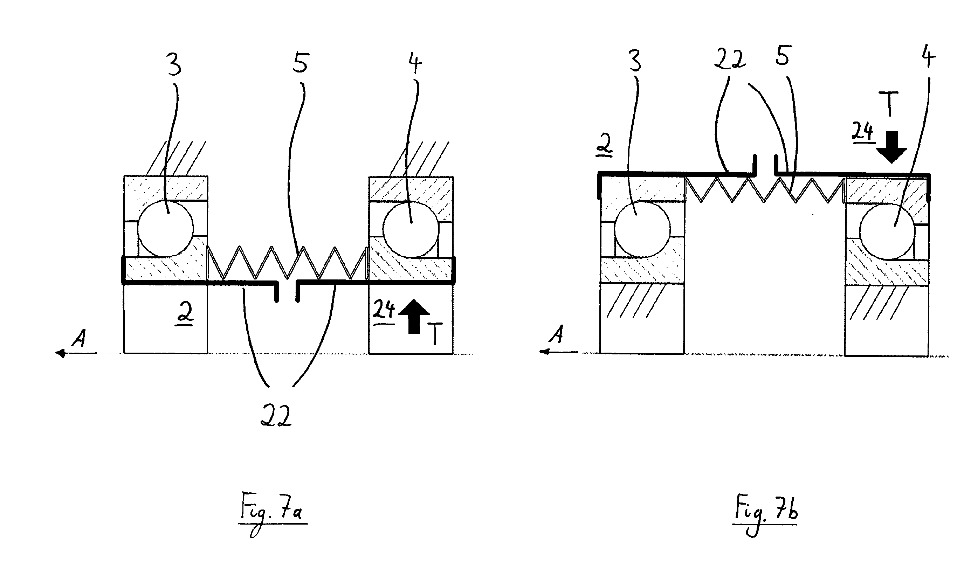

In Fig. 7a till 7d different conceptual designs are shown where two roller bearings 3, 4 in an X-configuration are employed. As can be seen, the actuator element 5 can be arranged at different locations: between the roller bearings or at one axial side of the bearing arrangement. One or two sleeve elements 22 guide the actuator element 5 or form an axial support for the same.

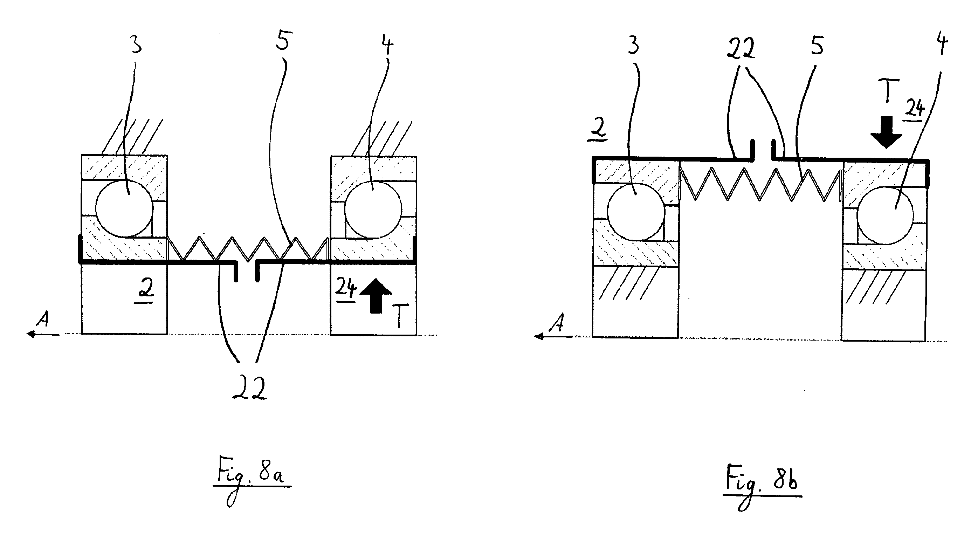

In Fig. 8a till 8d different conceptual designs are shown similar to Fig. 7a till 7d where the two roller bearings 3, 4 are arranged in O-configuration.

For the design of the torque-activated actuator element 5 different embodiments with multiple variations are possible.

As said, the behavior of the actuator element (expansion or contraction element) 5 is strongly dependent on the angle α of the beam elements 8. The angle α can basically be between 0° and 90°. The amount of expansion or contraction is adjustable with this parameter significantly.

With an angle of 0° a low torque transfer is feasible with low expansion. With an angle of 90° a high torque transfer is feasible with low expansion. A middle angle, like e. g. 45°, leads to a middle torque transfer with high expansion.

The angle α of the beam elements 8 can also vary over the length of the beams.

Another relevant parameter is - as said - the length L of the beam element 8 as well as the number of beam elements 8.

Also the shape of the beam elements 8 is relevant. The cross-sectional area can vary over the length of the beam elements 8.

The material of the actuator element 5 can be ferrous metals or non-ferrous metals. Also ceramic and plastics can be used.

Another relevant parameter is the inner and the outer diameter of the actuator element 5. The diameters can be variable over the length of the actuator element 5 resulting for example in a conical shape.

The beam elements 8 in the actuator element 5 are mostly created by removing material from a hollow tube. In the case of a hollow tube made out of fiber material, it is possible to gain the same result by changing the orientation of the fibers to an angular position without removing any material.

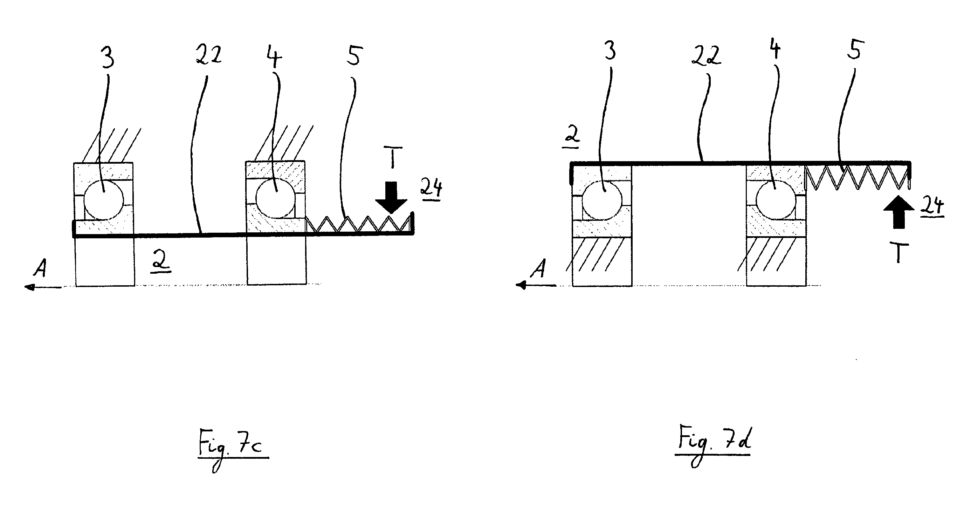

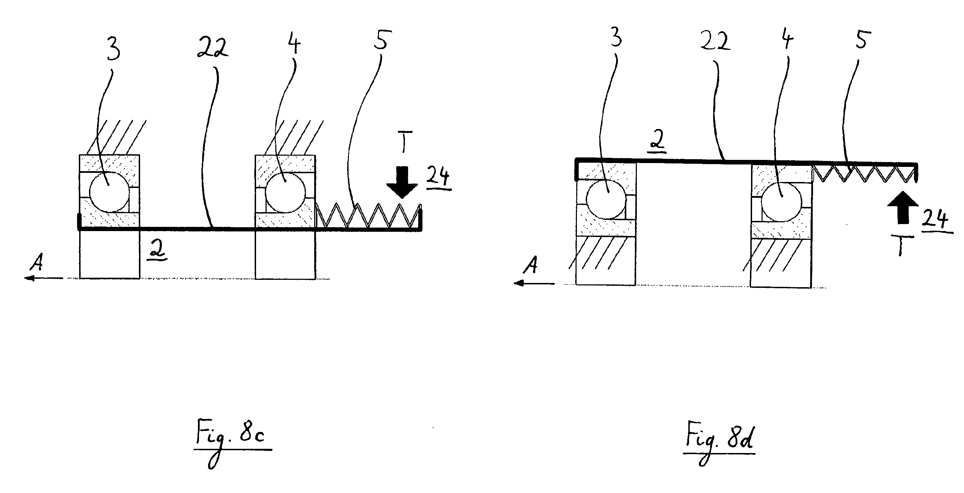

The actuation can be applied to any kind of pre-loaded bearings. Four types of integration within a bearing system exist.
1. For a bearing unit with rotating inner ring, the actuator element 5 can be positioned at one axial side of the bearing unit, as shown in Fig. 7c (for X-arrangement) and Fig 8c (for O-arrangement).

The actuator element 5 is fitted on the rotating shaft outside the bearing unit.

In the case of X-arrangement: The bearing preload decreases when the actuator element 5 expands and increases when the actuator element 5 contracts. The actuator element 5 is therefore adapted to contract in response to an increase in applied torque in the arrangement shown in Fig. 7c. Suitably, the actuator element 5 exerts a high initial preload.

In the case of O-arrangement: The bearing preload increases when the actuator element 5 expands and decreases when the actuator element 5 contracts. The actuator element 5 in the arrangement shown in Fig. 8c is therefore adapted to expand in response to an increase in applied torque.
2. For a bearing unit with rotating inner ring, the actuator element 5 can be positioned between the first and second bearings 3, 4 of the bearing unit, as shown in Fig. 7a (for X-arrangement) and Fig. 8a (for O-arrangement).

The rotating shaft is split where the actuator element 5 is fitted in between the two bearing inner rings.

In the case of X-arrangement: The bearing preload increases when the actuator element 5 expands and decreases when the actuator element 5 contracts. Consequently, the actuator element 5 in the arrangement shown in Fig. 7a is adapted to expand in response to an increase in applied torque.

In the case of O-arrangement: The bearing preload decreases when the actuator element 5 expands and increases when the actuator element 5 contracts. The actuator element 5 is therefore adapted to contract in response to an increase in applied torque in the arrangement shown in Fig. 8a.
3. For a bearing unit with rotating outer ring, the actuator element 5 can be positioned at one axial side of the bearing unit, as shown in Fig. 7d (for X-arrangement) and 8d (for O-arrangement). The actuator element 5 is fitted on the rotating shaft outside the bearing unit.

In the case of X-arrangement: The bearing preload increases when the actuator element 5 expands and decreases when the actuator element 5 contracts. Consequently, the actuator element 5 in the arrangement shown in Fig. 7d is adapted to expand in response to an increase in applied torque.

In the case of O-arrangement: The bearing preload decreases when the actuator element 5 expands and increases when the actuator element 5 contracts. In the arrangement of Fig. 8d, the actuator element 5 is therefore designed to contract in response to an increase in applied torque.
4. For a bearing unit with rotating outer ring, the actuator element 5 can be positioned between the first and second bearings 3, 4 of the bearing unit, as shown in Fig. 7b (for X-arrangement) and Fig. 8b (for O-arrangement). The rotating housing is split where the actuator element 5 is fitted in between the two bearing outer rings.

In the case of X-arrangement: The bearing preload decreases when the actuator element 5 expands and increases when the actuator element 5 contracts. In the arrangement of Fig. 7b, the actuator element 5 is therefore adapted to contract in response to an increase in applied torque.

In the case of O-arrangement: The bearing preload increases when the actuator element 5 expands and decreases when the actuator element 5 contracts. The actuator element 5 is therefore adapted to expand in response to an increase in applied torque in the arrangement shown in Fig. 8b.

### Reference Numerals:

- 1: Bearing arrangement
- 2: Driven shaft element
- 3: Roller bearing
- 4: Roller bearing
- 5: Actuator element (expansion and/or contraction element)
- 6: First axial end section
- 7: Second axial end section
- 8: Beam element
- 9: Outer circumferential surface
- 10: Helical curve / straight line
- 11: Hollow section
- 12: Filler material
- 13: Sensor element (strain gauge)
- 14: Damping element
- 15: End stop
- 16: Bush
- 17: Sliding surface (thrust bearing)
- 18: Sliding contact
- 19: Sliding contact
- 20: Sliding contact / fixed contact
- 21: Fixed contact
- 22: Sleeve element
- 23: Torque transfer means (axially sliding) (splines)
- 24: Input shaft
- 25: Flange
- 26: End region of the driven shaft element

- a: Distance
- A: Axial direction / Axis
- C: Circumferential direction
- b: Width
- L: Length (in axial direction)
- α: Angle
- T: Location of torque application

## Claims

1. Bearing arrangement (1), comprising
- a driven shaft element (2);
- at least two roller bearings (3,4) supporting the driven shaft element (2), wherein the roller bearings (3, 4) are arranged at an axial distance (a) along an axis (A) ; and
- an actuator element (5) by which the axial pre-load between the two roller bearings (3, 4) can be influenced, wherein the actuator element (5) comprises a first axial end section (6) and a second axial end section (7), wherein a plurality of beam elements (8) extend between the first and second axial end sections (6, 7), wherein the beam elements (8) are arranged along an outer circumferential surface (9) of the actuator element (5) and wherein the beam elements (8) are running along a helical curve or straight line (10) between the first and second axial end sections (6, 7),
**characterized in that**
the first axial end section (6) of the actuator element (5) is rotationally connected to the shaft element (2) and **in that** the second axial end section (7) of the actuator element (5) is rotationally connectable to an input shaft (24).

2. Bearing arrangement according to claim 1 or 2, **characterized in that** the actuator element (5) has a generally hollow-cylindrical or conical base geometry and wherein the first and/or second axial end sections (6, 7) are preferably ring-shaped.

3. Bearing arrangement according to one of claims 1 to 2 , **characterized in that** the beam elements (8) are designed and arranged so that hollow sections (11) exist between two adjacent beam elements (8).

4. Bearing arrangement according to one of claims 1 to 2 , **characterized in that** a filler material (12) is arranged between the beam elements (8), wherein the filler material (12) is preferably rubber material.

5. Bearing arrangement according to one of claims 1 to 4, **characterized in that** at least one of the beam elements (8) is equipped with a sensor element (13) for measurement of the strain in the beam element (8).

6. Bearing arrangement according to one of claims 1 to 5, **characterized in that** at least one damping element (14) is arranged between two adjacent beam elements (8).

7. Bearing arrangement according to one of claims 1 to 6, **characterized in that** the actuator element (5) is arranged coaxially to the shaft element (2).

8. Bearing arrangement according to one of claims 1 to 7, **characterized in that** the actuator element (5) and the shaft element (2) are arranged in series.

9. Bearing arrangement according to one of claims 1 to 8, **characterized in that** an end stop (15) is arranged at the second axial end section (7) of the actuator element (5) forming a support for axial forces from the actuator element (5).

10. Bearing arrangement according to claim 9 , **characterized in that** the second axial end section (7) comprises a sliding surface (17).

11. Bearing arrangement according to claim 9 , **characterized in that** a thrust bearing is arranged between the second axial end section (7) of the actuator element (5) and the end stop (15).

12. Bearing arrangement according to one of claims 1 to 11, **characterized in that** the actuator element (5) is arranged between the two roller bearings (3,4).

13. Bearing arrangement according to claim 12, **characterized in that** the shaft element (2) is split at a location between the two roller bearings (3, 4).

14. Bearing arrangement according to one of claims 1 to 11, **characterized in that** the actuator element (5) is arranged adjacent to one of the roller bearings (4) and extending in a direction remote from the other of the roller bearings (3).

15. Pinion gear unit comprising a bearing arrangement according to one of claims 1 to 14.

## Patentansprüche

1. Lageranordnung (1), umfassend
- ein angetriebenes Wellenelement (2);
- mindestens zwei Rollenlager (3,4), die das angetriebene Wellenelement (2) abstützen, wobei die Rollenlager (3, 4) in einem axialen Abstand (a) entlang einer Achse (A) angeordnet sind; und
- ein Betätigungselement (5), durch das die axiale Vorspannung zwischen den zwei Rollenlagern (3, 4) beeinflusst werden kann, wobei das Betätigungselement (5) einen ersten axialen Endabschnitt (6) und einen zweiten axialen Endabschnitt (7) umfasst, wobei sich mehrere Trägerelemente (8) zwischen dem ersten und dem zweiten axialen Endabschnitt (6, 7) erstrecken, wobei die Trägerelemente (8) entlang einer äußeren Umfangsoberfläche (9) des Betätigungselements (5) angeordnet sind und wobei die Trägerelemente (8) entlang einer spiralförmigen Kurve oder geraden Linie (10) zwischen dem ersten und dem zweiten axialen Endabschnitt (6, 7) verlaufen, **dadurch gekennzeichnet dass**
der erste axiale Endabschnitt (6) des Betätigungselements (5) drehbar mit dem Wellenelement (2) verbunden ist und dadurch, dass der zweite axiale Endabschnitt (7) des Betätigungselements (5) drehbar mit einer Eingangswelle (24) verbunden werden kann.

2. Lageranordnung nach Anspruch 1, **dadurch gekennzeichnet, dass** das Betätigungselement (5) eine im Allgemeinen hohlzylindrische oder konische Basisgeometrie aufweist und dass der erste und/ oder der zweite axiale Endabschnitt (6, 7) vorzugsweise ringförmig sind.

3. Lageranordnung nach einem der Ansprüche 1 bis 2, **dadurch gekennzeichnet, dass** die Trägerelemente (8) so ausgestaltet und angeordnet sind, dass die hohlen Abschnitte (11) zwischen zwei benachbarten Trägerelementen (8) vorhanden sind.

4. Lageranordnung nach einem der Ansprüche 1 bis 2, **dadurch gekennzeichnet, dass** ein Füllmaterial (12) zwischen den Trägerelementen (8) angeordnet ist, wobei das Füllmaterial (12) vorzugsweise Kautschukmaterial ist.

5. Lageranordnung nach einem der Ansprüche 1 bis 4, **dadurch gekennzeichnet, dass** mindestens eines der Trägerelemente (8) mit einem Sensorelement (13) zur Messung der Spannung in dem Trägerelement (8) ausgestattet ist.

6. Lageranordnung nach einem der Ansprüche 1 bis 5, **dadurch gekennzeichnet, dass** mindestens ein Dämpfungselement (14) zwischen zwei benachbarten Trägerelementen (8) angeordnet ist.

7. Lageranordnung nach einem der Ansprüche 1 bis 6, **dadurch gekennzeichnet, dass** mindestens ein Betätigungselement (5) koaxial in Bezug auf das Wellenelement (2) angeordnet ist.

8. Lageranordnung nach einem der Ansprüche 1 bis 7, **dadurch gekennzeichnet, dass** das Betätigungselement (5) und das Wellenelement (2) in Reihe angeordnet sind.

9. Lageranordnung nach einem der Ansprüche 1 bis 8, **dadurch gekennzeichnet, dass** ein Endanschlag (15) an dem zweiten axialen Endabschnitt (7) des Betätigungselements (5) angeordnet ist und eine Stütze für Axialkräfte aus dem Betätigungselement (5) bildet.

10. Lageranordnung nach Anspruch 9, **dadurch gekennzeichnet, dass** der zweite axiale Endabschnitt (7) eine Gleitfläche (17) umfasst.

11. Lageranordnung nach Anspruch 9, **dadurch gekennzeichnet, dass** ein Drucklager zwischen dem zweiten axialen Endabschnitt (7) des Betätigungselements (5) und dem Endanschlag (15) angeordnet ist.

12. Lageranordnung nach einem der Ansprüche 1 bis 11, **dadurch gekennzeichnet, dass** das Betätigungselement (5) zwischen zwei Rollenlagern (3, 4) angeordnet ist.

13. Lageranordnung nach Anspruch 12, **dadurch gekennzeichnet, dass** das Betätigungselement (2) an einer Stelle zwischen zwei Rollenlagern (3, 4) geteilt ist.

14. Lageranordnung nach einem der Ansprüche 1 bis 11, **dadurch gekennzeichnet, dass** das Betätigungselement (5) benachbart zu einem der Rollenlager (4) angeordnet ist und sich in eine Richtung fern von dem anderen der Rollenlager (3) erstreckt.

15. Zahnradgetriebe-Einheit, umfassend eine Lageranordnung nach einem der Ansprüche 1 bis 14.

## Revendications

1. Agencement de palier (1), comprenant
- un élément d'arbre mené (2) ;
- au moins deux paliers à roulement (3, 4) supportant l'élément d'arbre mené (2), les paliers à roulement (3, 4) étant disposés à une distance axiale (a) le long d'un axe (A) ; et
- un élément d'actionneur (5) par le biais duquel la précontrainte axiale entre les deux paliers à roulement (3, 4) peut être influencée, l'élément d'actionneur (5) comprenant une première section d'extrémité axiale (6) et une deuxième section d'extrémité axiale (7), une pluralité d'éléments de poutre (8) s'étendant entre la première et la deuxième section d'extrémité axiale (6, 7), les éléments de poutres (8) étant disposés le long d'une surface circonférentielle externe (9) de l'élément d'actionneur (5) et les éléments de poutre (8) s'étendant le long d'une courbe hélicoïdale ou en ligne droite (10) entre la première et la deuxième section d'extrémité axiale (6, 7),
**caractérisé en ce que**
la première section d'extrémité axiale (6) de l'élément d'actionneur (5) est connectée de manière rotative à l'élément d'arbre (2) et **en ce que** la deuxième section d'extrémité axiale (7) de l'élément d'actionneur (5) peut être connectée de manière rotative à un arbre d'entrée (24).

2. Agencement de palier selon la revendication 1, **caractérisé en ce que** l'élément d'actionneur (5) présente une géométrie de base généralement cylindrique creuse ou conique et dans lequel la première et/ou la deuxième section d'extrémité axiale (6, 7) est/sont de préférence de forme annulaire.

3. Agencement de palier selon l'une quelconque des revendications 1 à 2, **caractérisé en ce que** les éléments de poutre (8) sont conçus et disposés de manière à ce que des sections creuses (11) existent entre deux éléments de poutre adjacents (8).

4. Agencement de palier selon l'une quelconque des revendications 1 à 2, **caractérisé en ce qu'**un matériau de remplissage (12) est disposé entre les éléments de poutre (8), le matériau de remplissage (12) étant de préférence un matériau en caoutchouc.

5. Agencement de palier selon l'une quelconque des revendications 1 à 4, **caractérisé en ce qu'**au moins l'un des éléments de poutre (8) est équipé d'un élément de capteur (13) pour mesurer la contrainte dans l'élément de poutre (8).

6. Agencement de palier selon l'une quelconque des revendications 1 à 5, **caractérisé en ce qu'**au moins un élément d'amortissement (14) est disposé entre deux éléments de poutre adjacents (8).

7. Agencement de palier selon l'une quelconque des revendications 1 à 6, **caractérisé en ce que** l'élément d'actionneur (5) est disposé coaxialement par rapport à l'élément d'arbre (2).

8. Agencement de palier selon l'une quelconque des revendications 1 à 7, **caractérisé en ce que** l'élément d'actionneur (5) et l'élément d'arbre (2) sont disposés en série.

9. Agencement de palier selon l'une quelconque des revendications 1 à 8, **caractérisé en ce qu'**une butée de fin de course (15) est disposée au niveau de la deuxième section d'extrémité axiale (7) de l'élément d'actionneur (5) en formant un support pour des forces axiales provenant de l'élément d'actionneur (5).

10. Agencement de palier selon la revendication 9, **caractérisé en ce que** la deuxième section d'extrémité axiale (7) comprend une surface de glissement (17).

11. Agencement de palier selon la revendication 9, **caractérisé en ce qu'**un palier de poussée est disposé entre la deuxième section d'extrémité axiale (7) de l'élément d'actionneur (5) et la butée de fin de course (15).

12. Agencement de palier selon l'une quelconque des revendications 1 à 11, **caractérisé en ce que** l'élément d'actionneur (5) est disposé entre les deux paliers à roulement (3, 4).

13. Agencement de palier selon la revendication 12, **caractérisé en ce que** l'élément d'arbre (2) est divisé en un emplacement entre les deux paliers à roulement (3, 4).

14. Agencement de palier selon l'une quelconque des revendications 1 à 11, **caractérisé en ce que** l'élément d'actionneur (5) est agencé en position adjacente à l'un des paliers à roulement (4) et en s'étendant dans une direction éloignée de l'autre des paliers à roulement (3).

15. Unité d'engrenage à pignon comprenant un agencement de palier selon l'une quelconque des revendications 1 à 14.
